# EUROPÄISCHE PATENTSCHRIFT

(11) **EP 2 854 987 B1**
(45) Veröffentlichungstag und Bekanntmachung des Hinweises auf die Patenterteilung: **24.04.2019**
(21) Anmeldenummer: 13726116.0
(22) Anmeldetag: 28.05.2013
(51) Int. Cl.: B01D 35/30, B01D 35/31

(54) **SYSTEM ZUR ABGASNACHBEHANDLUNG BEI VERBRENNUNGSMOTOREN SOWIE ZUR PULSATIONSDÄMPFUNG UND/ODER VOLUMENSTROMGLÄTTUNG VON FLUIDEN**
SYSTEM FOR EXHAUST GAS AFTERTREATMENT IN INTERNAL COMBUSTION ENGINES AND FOR PULSATION DAMPING AND VOLUME FLOW SMOOTHING OF FLUIDS
SYSTÈME DE RETRAITEMENT DES GAZ D'ÉCHAPPEMENT DE MOTEURS À COMBUSTION INTERNE AINSI QUE D'AMORTISSEMENT DES PULSATIONS ET/OU DE LISSAGE DU DÉBIT VOLUMÉTRIQUE DE FLUIDES

(30) Priorität: 02.06.2012 DE 102012010981
(43) Veröffentlichungstag der Anmeldung: 08.04.2015
(73) Patentinhaber: Hydac Filtertechnik GmbH, 66280 Sulzbach/Saar (DE)
(72) Erfinder: KATTLER, Frank, 66346 Püttlingen (DE); GROH, Christian, 66453Gersheim (DE); SAKRASCHINSKY, Michael, 66386 St. Ingbert (DE)
(74) Vertreter: Bartels und Partner, Patentanwälte
(86) Internationale Anmeldenummer: PCT/EP2013/001572
(87) Internationale Veröffentlichungsnummer: WO 2013/178352

(56) Entgegenhaltungen:
- EP-A1- 2 489 845
- DE-A1- 2 121 533
- DE-A1-102009 061 063
- US-A1- 2004 094 468

## Beschreibung

Die Erfindung betrifft ein System zur Abgasnachbehandlung bei einem Verbrennungsmotor und/oder zur Pulsationsdämpfung und/oder Volumenstromglättung von Fluiden, wie Hydrauliköl, mit den Merkmalen im Oberbegriff von Anspruch 1.

Derartige Systeme zur Abgasnachbehandlung, die in der Fachsprache auch als Adblue-System bezeichnet werden, können in der Fahrzeugtechnik eingesetzt werden, um im Abgasstrom enthaltene Stickoxyde zu Stickstoff zu reduzieren. Diesbezüglich wird so vorgegangen, dass eine wässrige Harnstofflösung über eine Zuführeinrichtung von einem Vorratstank dosiert dem Abgasstrom zugeführt wird, wobei aus dem Harnstoff durch Hydrolyse Ammoniak gewonnen wird. Dieses wirkt im Abgasstrom als selektives Reduktionsmittel. Um den Wirkungsgrad der Reduktion zu optimieren, wird die wässrige Harnstofflösung dem Abgasstrom mittels einer durch ein Steuergerät lastabhängig gesteuerten Pumpe dosiert zugeführt.

Der Wassergehalt der als zusätzlicher Betriebsstoff dienenden Harnstofflösung wirkt sich auf das Betriebsverhalten nachteilig aus. Das mögliche Gefrieren der wässrigen Lösung bei entsprechend tiefen Umgebungstemperaturen kann zum Ausfall des gesamten Systems führen, insbesondere durch Schädigung oder Zerstörung der Filtervorrichtung und der mit ihr verbundenen Teile der Zuführeinrichtung. Diese Gefahr besteht insbesondere während längeren Standzeiten bei Frosttemperaturen.

Um dem zu begegnen, ist nach der Lehre der DE 102 20 672 A1 bereits vorgeschlagen worden, eine Filtereinheit derart auszubilden, dass das Filtergehäuse die beim Übergang vom flüssigen in den festen Aggregatzustand des gefrierenden Mediums auftretende Volumenänderung beschädigungsfrei aufnehmen kann, indem das Filterelement der Filtereinheit zumindest teilweise von einem elastisch verformbaren Mantelteil mit einem vorgebbaren radialen Abstand umgeben ist. Der Mantelteil wird also bei Druck- und Volumendehnungen des Mediums bei Änderung seines Aggregatzustandes in Richtung eines gefrierenden Feststoffes elastisch verformt und kehrt anschließend in seine ursprüngliche Form zurück, sobald das gefrorene Medium durch Temperaturerhöhung wieder flüssig wird.

Bei der bekannten Lösung ist der das Filterelement umgebende Mantelteil in der Art einer zylindrisch verformbaren Membran ausgebildet, die Bestandteil des Deckelteiles der unteren Gehäusehälfte des Filtergehäuses ist und die im nicht betätigten Zustand, also bei nicht eingefrorenem Medium sich mit einem radialen Abstand sowohl zum Außenumfang des Filterelementes, als auch zum Innenumfang des weiteren, topfartig ausgebildeten Gehäuseoberteils in diesem erstreckt. Kommt es zum Gefrieren, dehnt sich der membranförmige Mantelteil, der insoweit die Ausgleichseinrichtung bildet, in Richtung der Innenseite des Gehäuseoberteils in der Art eines Ballons aus und zwar bis zum Erreichen der maximal möglichen Auslenkung. Wird das Medium wieder flüssig, kehrt auch die Membran in ihren Ausgangszustand in reversibler Weise zurück und bildet insoweit einen das gefrierende Medium erneut aufnehmenden Medienraum zwischen der Innenumfangsseite des verformbaren Mantelteils und der Außenumfangsseite des zylindrischen Filterelementes aus sowie einen Ausgleichsraum zwischen der Außenumfangsseite dieses Mantelteiles und der Innenumfangsseite des oberen Gehäuseteiles, das insoweit für einen Druckausgleich über eine Entlastungsbohrung in der Gehäusewandung verfügt. Ist die dahingehende Entlastungsbohrung geschlossen oder nicht vorhanden, kann in dem genannten Ausgleichsraum sich auch ein Gegendruck aufbauen, der den membranartigen Mantelteil in Richtung des Medienraumes mit der gefrierenden Substanz rückstellt.

Neben etwaigen Volumenänderungen des Mediums durch das angesprochene Gefrieren kommt es auch bei üblichen Systemen, wie hydraulischen Filtern, durch Druckstöße, Pulsationen sowie sonstigen Volumenstromänderungen zu den beschriebenen, unerwünschten Einflüssen. Insofern kann der hierdurch entstehende schädigende Einfluss durchaus gleichgesetzt werden mit den vorstehend beschriebenen Problemen bei Systemen zur Abgasnachbehandlung.

Die EP 2 489 845 A1 und die DE 10 2009 061 063 A1 beschreiben jeweils ein System zur Abgasnachbehandlung bei einem Verbrennungsmotor, aufweisend zumindest eine Filtervorrichtung mit einem in einem Filtergehäuse aufgenommenen Filterelement zur Filtration einer gefrierbaren Substanz, insbesondere in Form einer wässrigen Harnstofflösung, die in den Abgasstrom des Verbrennungsmotors zuführbar ist, wobei Teile der Filtervorrichtung mit mindestens einem Fluidraum für die zumindest zeitweise Aufnahme der gefrierbaren Substanz innerhalb des Filtergehäuses zusammenwirken, wobei als Schutz gegen eine Schädigung des Systems durch Volumenausdehnung bei Gefrieren der Substanz eine verformbare Ausgleichseinrichtung vorhanden ist, die innerhalb des Filtergehäuses angeordnet ist, wobei die Ausgleichseinrichtung neben dem Filtergehäuse ein eigenständiges Bauteil ist und wobei die Ausgleichseinrichtung in jedem Betriebszustand außenumfangsseitig und im Wesentlichen in abstandsfreier Weise von dem Filtergehäuse umfasst ist.

Ausgehend von dem vorstehend genannten Stand der Technik liegt der Erfindung die Aufgabe zugrunde, ein System zur Verfügung zu stellen, insbesondere auch in Form eines Adblue-Systems, bei dem die Gefahr einer Schädigung durch Frosteinflüsse, Druckstöße oder Druckpulsationen, besonders unter Einbezug der notwendigen Filtervorrichtung, minimiert ist, wobei das jeweilige System einen sicheren und robusten Betrieb erlaubt.

Erfindungsgemäß ist diese Aufgabe durch ein System gelöst, das die Merkmale des Patentanspruches 1 in seiner Gesamtheit aufweist.

Gemäß dem kennzeichnenden Teil des Anspruches 1 bestehen wesentliche Besonderheiten der Erfindung darin, dass die Ausgleichseinrichtung im unverformten Zustand zumindest teilweise in unmittelbarer Anlage mit Teilen eines Abstandhalters ist, der das Filterelement zumindest teilweise umfasst, und dass der Abstandhalter aus einem mit Fluiddurchlässen versehenen Abstandsrohr gebildet ist, der mit einem vorgebbaren Abstand das Filtermaterial des Filterelementes umfasst.

Diese Lösung hat den Vorteil, dass neben dem Fluidraum im Inneren des Filterelementes ein zusätzlicher Fluidraum außerhalb des Filterelementes geschaffen ist, wobei die dahingehend außerhalb gelegene Seite die Zuströmseite des Unfiltrats bildet, das sich insoweit in dem zusätzlichen Fluidraum verbreiten kann, was nicht nur Vorteile beim Gefrieren des sich insoweit dann ausdehnenden Mediums bedeutet, sondern auch zu einer gleichmäßigen Verteilung des zu filtrierenden Mediums oder Fluids entlang der gesamten Längsausrichtung des Filterelements in dessen normalen Betrieb führt, was wiederum der angestrebten Volumenstromglättung zugute kommt.

Es ist ferner vorgesehen, dass die Ausgleichseinrichtung neben dem Filtergehäuse ein eigenständiges Bauteil ist, und dass die Ausgleichseinrichtung au-βenumfangsseitig und in abstandsfreier Weise von dem Filtergehäuse unter Anlage umfasst ist. Dadurch ist der Gefahr wirksam begegnet, dass bei einem etwaigen Gefrieren einer wässrigen Substanz, wie dies bei einer wässrigen Harnstofflösung unter Frostbedingungen regelmäßig der Fall ist, aufgrund der damit verbundenen Volumenvergrößerung es zu einem Bersten von Wandungen, beispielsweise der Gehäuseteile der Filtervorrichtung, kommen kann oder insbesondere zu einer Schädigung oder vollständigen Zerstörung eines der Filtervorrichtung zugehörigen Filterelementes. Im Gegensatz zu der bekannten auslenkbaren Membran als Ausgleichseinrichtung wird bei der erfindungsgemäßen Lösung die Ausgleichseinrichtung gegen die Innenumfangsseite des Mantelteils gleichmäßig gedrückt, so dass neben einem hohen Verdrängungsvolumen für das gefrierende Medium sich auch große Abstützkräfte realisieren lassen, die das empfindliche Filtermaterial schonen.

Dadurch dass die Ausgleichseinrichtung neben dem Filtergehäuse ein eigenständiges Bauteil ist, schützt das robust auszulegende Filtergehäuse die verformbare und insoweit nachgiebige Ausgleichseinrichtung, die gegenüber Beschädigungen von außen grundsätzlich empfindlich ist. Insbesondere ergibt sich hierdurch auch ein besonders stabiler Systemaufbau, so dass das System zur Abgasnachbehandlung auch mit hohen Systemdrücken gefahren werden kann, da die relevanten Kräfte ausschließlich durch die massiv ausgebildete Filtergehäusekonstruktion aufgenommen werden. Dies gilt auch für den Fall des Vereisens oder Gefrierens des zu filtrierenden Mediums, dessen ausgeübte Verformungskräfte sicher von dem Metall-Filtergehäuse aufgefangen werden können, selbst wenn die Ausgleichseinrichtung bereits vollständig verformt, respektive vollständig verdichtet ist.

Darüber hinaus erlaubt die Ausgleichseinrichtung eine sichere Aufnahme von Kräften, sofern der zu filtrierende Fluidstrom innerhalb eines hydraulischen Kreises, an den die Filtervorrichtung angeschlossen ist, Druckstöße erfährt, die von der Maximal-Druckbeanspruchung sehr große Werte einnehmen können. So lässt sich jeder impulsartige Druckstoß durch die Ausgleichseinrichtung sicher auffangen. Dies gilt auch für den Fall, dass im hydraulischen Kreis Pulsationen auftreten, was regelmäßig mit Wechselbeanspruchungen des Filterelementmaterials einhergeht. Neben einer Dämpfung der Pulsationen lässt sich auch der durch die Filtervorrichtung hindurchzuführende Volumenstrom mittels der Ausgleichseinrichtung entsprechend glätten, so dass an die Filtervorrichtung angeschlossene hydraulische Verbraucher eine konstante harmonische Fluidversorgung erfahren. Diese Vorteile ergeben sich für übliche zu filtrierende Flüssigkeiten, wie Hydrauliköl, auch ohne, dass diese einem Gefrieren durch niedrige Außentemperaturen unterliegen.

Dadurch, dass die Ausgleichseinrichtung in jedem ihrer möglichen Betriebszustände außenumfangsseitig und in abstandsfreier Weise von dem Filtergehäuse permanent unter Anlage umfasst ist, erfolgt, ohne dass es zu einem membranartigen Ausbeulen der Ausgleichseinrichtung käme, eine vollflächige, gleichmäßige Abstützung entlang der gesamten Außenumfangsseite der erfindungsgemäßen Ausgleichseinrichtung mit der Folge, dass auch das nach innen hin sich insoweit anschließende Filterelement vollflächig, insbesondere auch während eines Gefriervorganges, entlastet ist. Hierzu trägt auch mit bei, dass bei einer bevorzugten Ausführungsform die Ausgleichseinrichtung mit Teilen eines Abstandhalters ist, der das Filterelement zumindest teilweise umfasst und dabei eine Fluidraumvergrößerung ermöglicht, damit sich das zu filtrierende und gegebenenfalls gefrierende Fluid gut verteilen kann und insoweit weder beim Gefrieren noch beim Einleiten von Druckstößen oder Druckpulsationen keine Druckspitzen innerhalb des Systems auftreten können.

In besonders vorteilhafter Weise kann die Ausgleichseinrichtung als verformbares Bauteil eine mit einer Zunahme des Fluiddruckes bei Gefrieren oder bei Druck- oder Volumenänderungen des Fluids einhergehende Volumenausdehnung der Substanz bzw. des Fluids innerhalb des zuordenbaren Fluidraumes kompensieren, was das Filterelement zusätzlich entlastet, da dieses für eine Kompensation der damit verbundenen Krafteinleitung nichts beitragen muss. Insoweit ist in vorteilhafter Weise vorgesehen, dass die im Filtergehäuse angeordnete verformbare Ausgleichseinrichtung eine druckabhängige Vergrößerung des den Fluidraum als Ganzes jeweils bildenden Teilvolumens relativ zum übrigen Restvolumen des Filtergehäuses ermöglicht.

Bei einer weiteren bevorzugten Ausgestaltung des erfindungsgemäßen Systems ist vorgesehen, dass die Verformbarkeit der Ausgleichseinrichtung elastischer Natur mit vorgebbarer Kompressibilität ist und dass die Ausgleichseinrichtung mindestens einen vorzugsweise zylindrischen Mantelteil aufweist, der sich in Längsrichtung des Filtergehäuses erstreckt. Dergestalt kann über die gesamte Baulänge des Filterelementes eine permanent wirksame Abstützung über die Ausgleichseinrichtung im Falle des gefrierenden Mediums oder im Falle von gefährlichen Druckänderungen oder Volumenstromschwankungen erfolgen.

Bei einer besonders bevorzugten Ausführungsform des erfindungsgemäßen Systems geht der Mantelteil in Richtung des zumindest teilweise geschlossen ausgeführten Endes des Filtergehäuses in ein Kappenteil über, das das Filterelement gegenüber dem Filtergehäuse an seinem einen freien Ende abstützt. Vorzugsweise ist dabei das Kappenteil einstückiger Bestandteil des Mantelteils. Auf diese Art und Weise lässt sich bei einem Volumenänderungen unterliegenden, zu filtrierenden Medium nicht nur eine wirksame Abstützung des Filterelementes nebst Volumenkompensation in radialer Ausrichtung desselben vorsehen, sondern auch axial bezogen auf dessen axiale Baulänge oder Bauhöhe.

Als besonders vorteilhaft hat es sich erwiesen, sowohl den Mantelteil als auch das Kappenteil aus einem porösen, vorzugsweise aus einem geschlossene Poren aufweisenden Material auszubilden und hierfür als besonders geeignetes Material Moosgummi einzusetzen. Aufgrund der geschlossenporigen Ausgestaltung der elastisch nachgiebigen Moosgummi-Grundstruktur ist ein vermehrter Eintritt des zu filtrierenden Mediums in die Porenstruktur der Ausgleichseinrichtung vermieden, so dass bei einem Gefrieren die Ausgleichseinrichtung nicht zum Aufquellen neigt, sondern ihre elastisch rückstellbare Grund-Ausgangsstruktur beibehält. Insbesondere ist aufgrund der Porenstruktur der Ausgleichseinrichtung eine progressive Kraft-Feder-Kennlinie erreicht, so dass mit festwirkendem Zusammendrücken der Porenstruktur immer höhere Rückstellkräfte erreicht sind, was insbesondere auch bei der Glättung der ungewollten Pulsationen eine Rolle spielt.

Das bei dem System zum Einsatz kommende Filterelement kann aus einem zylindrischen, beispielsweise aufgewickelten, mattenförmigen Filtermaterial bestehen, vorzugsweise ist jedoch vorgesehen, dass das mattenförmige Filtermaterial gegebenenfalls in mehrlagiger Form und mit Stützgittern in plissierter Ausgestaltung vorliegt und sich zwischen zwei Endkappen des Elementes erstreckt, so dass sich dieses im Verschmutzungsfall in einfacher und rascher Weise gegen ein Neuelement tauschen lässt.

Da im Filtrierbetrieb grundsätzlich das Problem besteht, dass die Filterfalten des plissierten Filtermaterials unter dem Strömungsdruck sich paketweise aneinanderlegen können, was insoweit die Filtrationsleistung beeinträchtigt, da nicht mehr die gesamte wirksame Filterfläche des plissierten Filtermaterials zur Verfügung steht, erlaubt die topfförmige Ausgleichseinrichtung, sofern diese mit ihrer Innenseite unmittelbar an dem Filterelement zur Anlage kommt, neben einer Aussteifung des Filtermantels als Ganzes auch eine Positionierung der freien Filterfaltenenden, so dass diese am Ausgleichsmantelteil fixiert sind und nicht mehr aufeinanderklappen können.

Des Weiteren kann die Filtervorrichtung einen sich durch die Endkappe in den inneren Filterhohlraum erstreckenden, elektrischen Heizstab als Wärmequelle aufweisen, die sowohl als Einfrierschutz als auch als Auftaueinrichtung dient. In besonders vorteilhafter Weise wird dadurch erreicht, dass bei Kaltstart des Verbrennungsmotors unter Frostbedingungen bei gefrorener Harnstofflösung und dadurch blockierter Filtervorrichtung die Kaltlaufphase, bei der keine Abgasnachbehandlung stattfindet, lediglich so lange dauert, wie durch die Wärme des Heizstabes die gefrorene Harnstofflösung aufgetaut ist, so dass das System den Betrieb aufnimmt und die Abgasnachbehandlung einsetzt.

Sofern gemäß dem kennzeichnenden Teil der unabhängigen Patentansprüche 1 und 2 davon die Rede ist, dass die Ausgleichseinrichtung in jedem Betriebszustand außenumfangsseitig und im Wesentlichen in abstandsfreier Weise von dem Filtergehäuse umfasst ist, bezieht sich das im Wesentlichen auf die Angabe, dass der Außenmantel der Ausgleichseinrichtung nahezu vollflächig an der Innenwandung des Filtergehäuses anliegt. Für einen verbesserten Ein- und Ausbau der topfartigen Ausgleichseinrichtung in das Filtergehäuse hinein bzw. aus dem Filtergehäuse heraus, kann jedoch bevorzugt vorgesehen sein, dass in vorgebbaren radialen Abständen zueinander über die gesamte Längsausrichtung des aufgezeigten Mantels der Ausgleichseinrichtung Längsnuten eingebracht sind, die insbesondere beim Einschieben der topfartigen Ausgleichseinrichtung in das Filtergehäuse dabei helfen, die eingeschlossene Luft, die beim Einschieben verdrängt wird, nach außen hin abzuführen, ohne dass der Einschubvorgang behindert wird. Gleichermaßen lässt sich dann durch Nachströmen von Luft ein Vakuum zwischen Filtergehäuse und Ausgleichseinrichtung verhindern, indem beim Herausnehmen der Ausgleichseinrichtung Luft entsprechend nachströmen kann.

Bei einer System-Weiterausgestaltung gemäß den Merkmalen der Patentansprüche 14 und 15 wird für eine dosierte Zufuhr der gefrierbaren Substanz zur Filtervorrichtung eine geeignete Fördereinrichtung mit Pumpe vorgeschlagen bzw. ein Sensorüberwachungssystem, mit dem sich einzelne Zustandsgrößen der gefrierbaren Substanz überwachen lassen, um dergestalt Rückschlüsse auf den jeweiligen Betriebszustand der eingesetzten Filtervorrichtung treffen zu können.

Nachstehend ist die Erfindung anhand von in der Zeichnung dargestellten Ausführungsbeispielen im Einzelnen erläutert. Es zeigen:
- Fig. 1: einen gegenüber einer praktischen Ausführungsform vergrößert und abgebrochen gezeichneten Längsschnitt lediglich des der Pumpe benachbarten Bereichs eines Ausführungsbeispiels des erfindungsgemäßen Systems;
- Fig. 2: einen abgebrochen, gegenüber Fig. 1 in kleinerem Maßstab sowie demgegenüber um 90° verdreht gezeichnetem Teilschnitt des der Pumpe benachbarten Bereichs, wobei eine zugeordnete Filtervorrichtung in unvollständiger Darstellung lediglich angedeutet ist;
- Fig. 3: eine der Fig. 2 entsprechende Darstellung eines abgewandelten Ausführungsbeispiels;
- Fig. 4: einen schematisch vereinfacht gezeichneten Längsschnitt lediglich einer Filtervorrichtung;
- Fig. 5: einen vergrößert, schematisch vereinfacht und abgebrochen gezeichneten Teilschnitt lediglich des einem Endbereich der Filtervorrichtung benachbarten und Sensoren aufweisenden Bereichs eines weiteren Ausführungsbeispiels;
- Fig. 6: einen schematisch vereinfacht gezeichneten Längsschnitt durch einen Teil der Filtervorrichtung gemäß einem gegenüber der Fig. 4 geänderten Ausführungsbeispiel;
- Fig. 7: eine Draufsicht, gesehen in Pfeilrichtung A nach der Fig. 6;
- Fig. 8: eine der Fig. 6 entsprechende Längsschnittdarstellung durch die Filtervorrichtung mit Filtergehäuse, in dem die Teile der Filtervorrichtung nach der Fig. 6 aufgenommen sind; und
- Fig. 9: einen Schnitt durch die Filtervorrichtung nach der Fig. 8 entlang der Linie X-X.

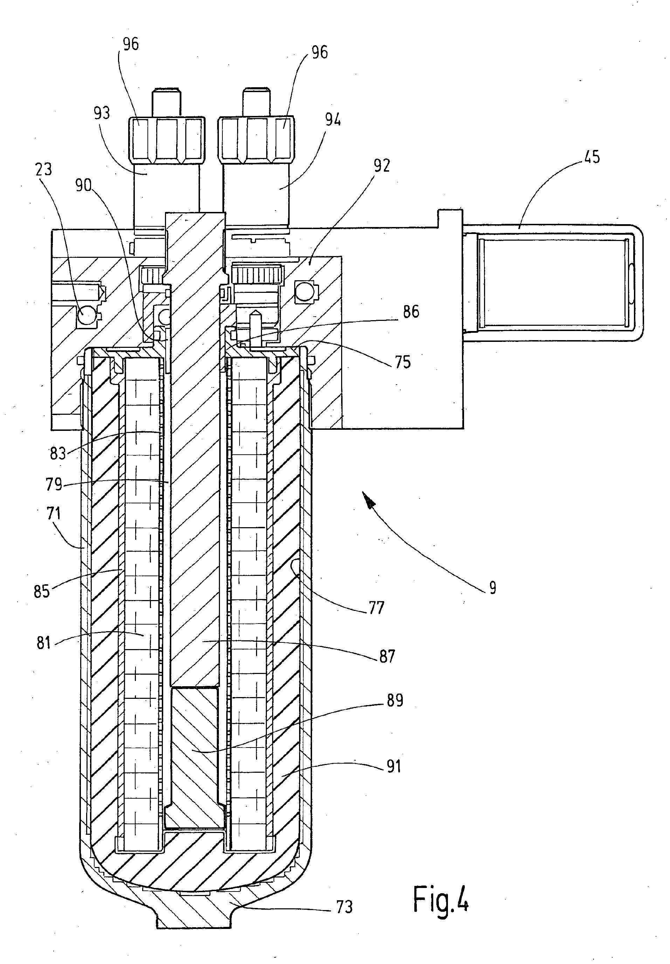

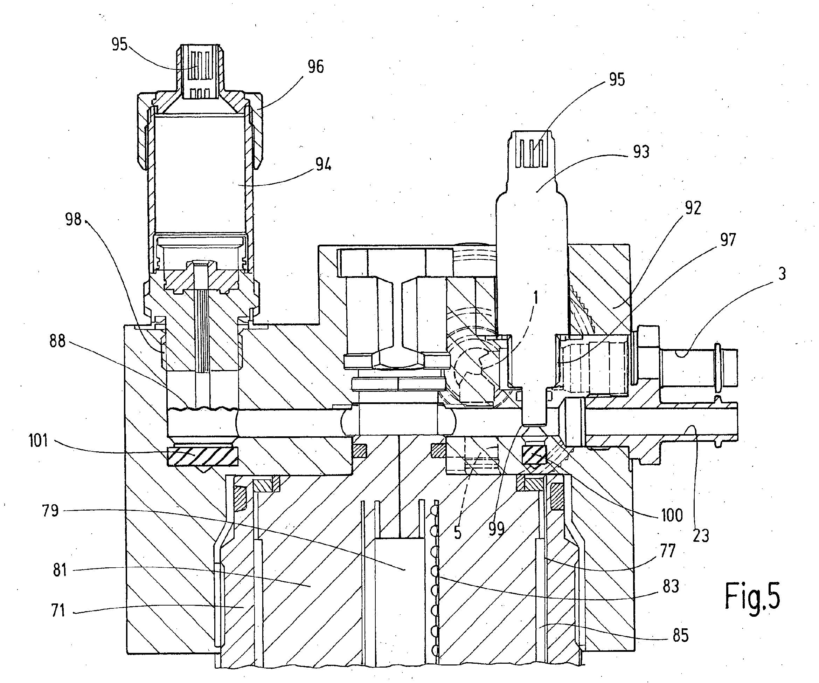

Die Ausführungsformen der Fig. 4 und 5 dienen lediglich der Erläuterung des Hintergrundes der Erfindung und sind nicht Gegenstand eines Anspruches.

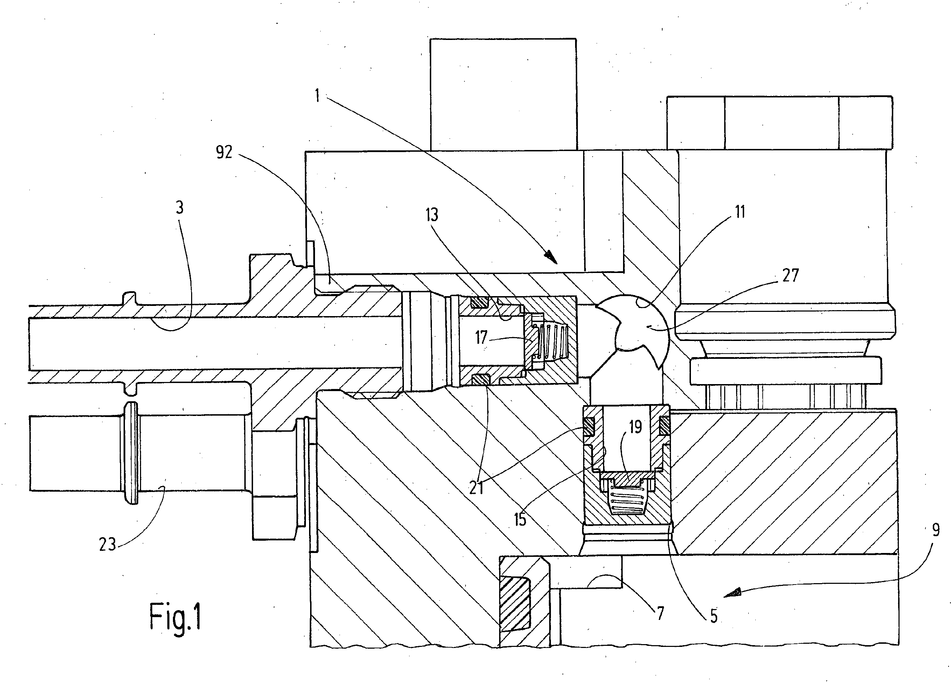

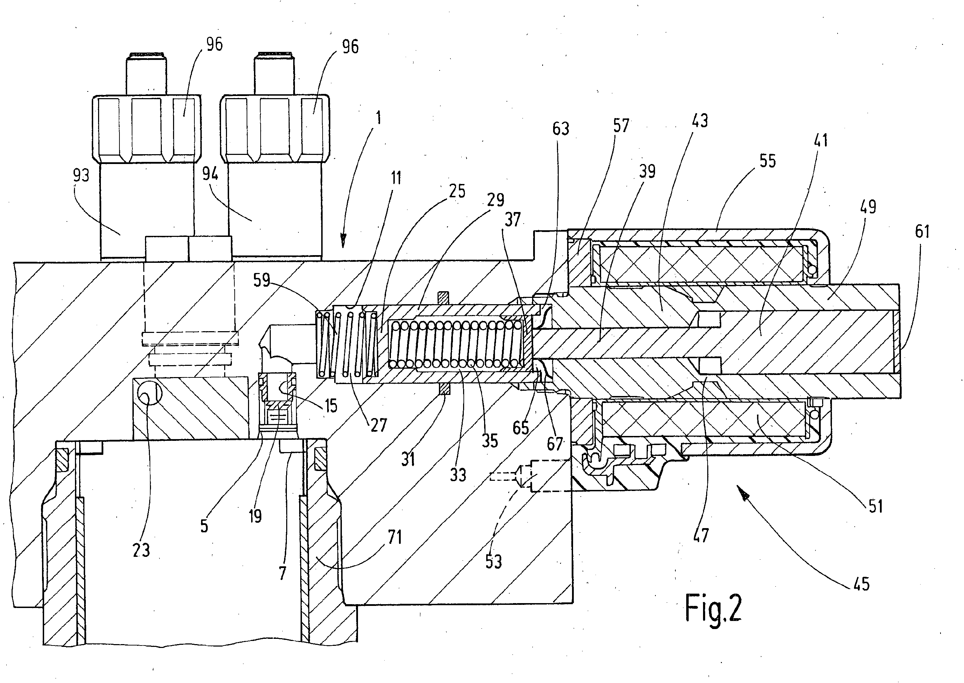

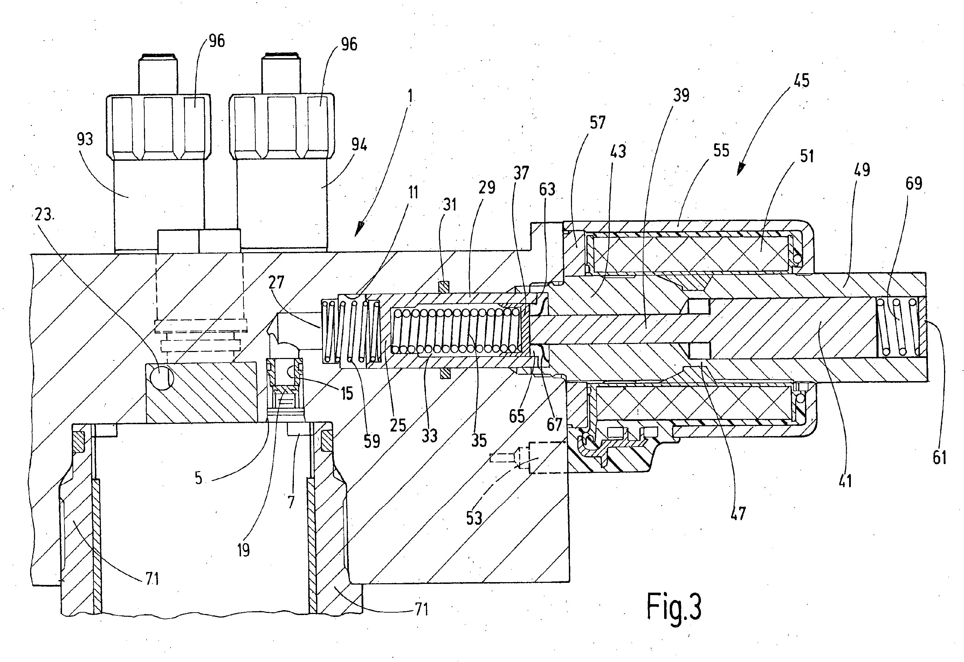

Von einem Ausführungsbeispiel des erfindungsgemäßen Systems zeigt die Fig. 1 eine Pumpe 1 als Bestandteil einer Zuführeinrichtung, die von einem nicht gezeigten Vorratstank, der einen Vorrat einer wässrigen Harnstofflösung enthält, über die Pumpe 1 zu einer am besten in Fig. 4 gezeigten Filtervorrichtung und von dieser zu einer (ebenfalls nicht gezeigten) Einspritzdüse führt, die eine dosierte Menge der Harnstofflösung in den Abgasstrahl sprüht. Die Harnstofflösung gelangt über eine Eingangsleitung 3 zur Pumpe 1, die eine dosierte Menge der Harnstofflösung vom Pumpenausgang 5 zum Filtereinlass 7 der Filtervorrichtung 9 fördert, die in Fig. 4 näher dargestellt ist. Wie den Fig. 2 und 3 entnehmbar ist, ist die Pumpe 1 als Kolbenpumpe ausgebildet, deren Zylinder 11 in Fig. 2 und 3 sichtbar ist, die gegenüber der Zeichnungsebene von Fig. 1 um 90° versetzt sind. Wie Fig. 1 zeigt, befinden sich an der Eingangsleitung 3 und am Ausgang 5 der Pumpe 1 jeweils ein Rückschlagventil 13 bzw. 15 mit federbelasteten Schließkörpern 17 bzw. 19, wobei das Rückschlagventil 13 beim Ansaugen der Pumpe 1 öffnet und das Rückschlagventil 15 beim Förderhub der Pumpe 1 öffnet. Dichtringe 21 bilden die Abdichtung an den Rückschlagventilen 13, 15. Die die Filtervorrichtung 9 verlassende Harnstofflösung gelangt über eine Ausgangsleitung 23 zum Abgasstrom.

Wie bereits erwähnt, ist die Pumpe 1 eine Kolbenpumpe. Der im Zylinder 11 geführte Pumpenkolben 25 ist an seinem vom Fluidraum 27 der Pumpe 1 abgewandten Ende durch ein Hülsenteil 29 verlängert, mit dem der Kolben 25 an der Wand des Zylinders 11 axial bewegbar geführt ist, wobei zur Abdichtung eine Kolbendichtung 31 vorgesehen ist. Der Innenraum 33 des Hülsenteils 29 ist an dem dem Fluidraum 27 entgegengesetzten Ende offen. Vom offenen Ende her ist in den Innenraum 33 eine Druckfeder 35 eingesetzt. Diese stützt sich einerseits am geschlossenen Boden des Hülsenteils 29 und andererseits an einem Druckstück 37 ab, das am offenen Ende des Hülsenteils 29 in diesem verschiebbar ist. Mit der freien Seite des Druckstücks 37 wirkt ein Betätigungsteil 39 zusammen, das durch einen Fortsatz eines Magnetkolbens 41 gebildet ist. Dieses Betätigungsteil 39 ist in einem Polkörper 43 einer Elektromagneteinrichtung 45 verschiebbar geführt. Über eine Verjüngungsstelle 47 verringerten Materialquerschnitts, die eine magnetische Trennstelle bildet, geht der Polkörper 43 in ein Polrohr 49 über, in dem der mit dem Betätigungsteil 39 verbundene Magnetkolben 41 bewegbar ist. Die Magnetwicklung 51, die über eine Anschlusseinrichtung 53 bestrombar ist, befindet sich in einem ferromagnetischen Magnetgehäuse 55 mit einer Polplatte 57.

Die Elektromagneteinrichtung 45 ist als sog. "drückender" Magnet ausgebildet, wobei der Magnetkolben 41 bei Bestromung der Magnetwicklung 51 das Betätigungsteil 39 gegen das Druckstück 37 und damit die Druckfeder 35 drückt. Dadurch wird über die Druckfeder 35 der Pumpenkolben 25 in der Zeichnung nach links für einen Förderhub bewegt, bei dem eine Dosismenge der Harnstofflösung aus dem Fluidraum 27 über das Rückschlagventil 15 am Pumpenausgang 5 abgegeben wird. Die Fig. 2 und 3 zeigen jeweils den unbestromten Zustand der Elektromagneteinrichtung 45. Durch Bestromen der Wicklung 51 bewegt das Betätigungsteil 39 den Kolben 25 für einen Förderhub in der Zeichnung nach links gegen die Kraft einer Rückstellfeder 59, die sich im Fluidraum 27 befindet und den Pumpenkolben 25 bei Beendigung der Bestromung der Wicklung 51 in die in Fig. 2 und 3 gezeigte Ausgangsstellung nach rechts zurück bewegt. Bei dem Ausführungsbeispiel von Fig. 2 liegt das freie Ende des Magnetkolbens 41 hierbei an einem Endanschlag an, der durch ein Abschlussstück 61 am Ende des Polrohres 49 gebildet ist.

Auch wenn sich der Magnetkolben 41 in einer Endposition befindet, wie es in Fig. 2 gezeigt ist, wo eine weitere Bewegung des Betätigungsteils 39 in eine Richtung blockiert ist, die der Vergrößerung des Volumens des Fluidraums 27 entspricht, ist eine Hubbewegung des Pumpenkolbens 25 möglich, weil die Druckfeder 35 ein nachgiebiges Bauteil darstellt, das bei einem übermäßigen Druckanstieg im Fluidraum 27 zusammendrückbar ist, so dass der Pumpenkolben 25 eine das Volumen des Fluidraums 27 vergrö-βernde Bewegung in der Zeichnung nach rechts ausführen kann, wobei sich das Ende 63 des Hülsenteils 29 in einen Freiraum 65 am Polkörper 43 bewegt. Dank der so gebildeten Nachgiebigkeit kann so die bei einem Gefrieren der Harnstofflösung im Fluidraum 27 auftretende Volumenvergrößerung schadlos kompensiert werden. Im Freiraum 65 befindet sich eine Membrandichtung 67 als zusätzliches Dichtelement.

Die Fig. 3 zeigt eine Variante, bei der anstelle des durch das Endstück 61 gebildeten festen Endanschlags des Magnetkolbens 41 eine Zusatzfeder 69 vorgesehen ist, die das Betätigungsteil 39 des Magnetkolbens 41 stets kraftschlüssig in Anlage am Druckstück 37 der Druckfeder 35 hält, jedoch eine geringere Federwirkung als die Rückstellfeder 59 besitzt.

Die Fig. 4 zeigt nähere Einzelheiten der Filtervorrichtung 9 mit einem Filtergehäuse 71 in Form eines kreiszylindrischen Topfes mit geschlossenem Boden 73. Das Gehäuse 71 ist am offenen Ende durch eine Endkappe 75 eines im Gehäuse 71 aufgenommenen Filterelements 77 geschlossen. Das Filterelement 77 weist ein einen hohlzylindrischen inneren Filterhohlraum 79 umgebendes Filtermedium 81 auf, dessen Innenseite an einem Stützrohr 83 anliegt und außenseitig von einem Stützkörper 85 umgeben ist. Dieser begrenzt innerhalb des Filtergehäuses 71 ein Teilvolumen, das den mit dem inneren Filterhohlraum 79 in Fluidverbindung stehenden Fluidraum als Teilvolumen des Gehäuses 71 begrenzt. Eingang (Filtereinlass 7 von Fig. 2 und 3) und Ausgang 90 des Fluidraums des Filtergehäuses 71 befinden sich an der Endkappe 75 des Filterelements 77. Durch eine zentrale Öffnung 86 der Endkappe 75 erstreckt sich ein elektrischer Heizstab 87 in den inneren Filterhohlraum 79. Für eine thermische Kopplung mit dem Heizstab 87 schließt sich an dessen Ende ein metallisches Füllstück 89 an.

Um bei einem Gefrieren der wässrigen Harnstofflösung in dem den Fluidraum bildenden Teilvolumen des Filtergehäuses 71 eine Vergrößerung des Teilvolumens relativ zum Restvolumen im Filtergehäuse 71 zu ermöglichen, ist als nachgiebiges Element zwischen der Innenwand des Gehäuses 71 und der Außenseite des Filterelements 77 eine Ummantelung 91 aus einem Werkstoff vorgegebener Kompressibilität vorgesehen. Beim vorliegenden Ausführungsbeispiel ist hierfür eine Ummantelung 91 aus Moosgummi vorgesehen, die beim gezeigten Beispiel, von der Endkappe 75 ausgehend, das Filterelement 77 vollständig ummantelt. Die Ummantelung 91 füllt somit das gesamte, innerhalb des Filtergehäuses 71 befindliche Restvolumen aus, das sich durch Zusammendrücken der Ummantelung 91 relativ zu dem den Fluidraum bildenden Teilvolumen verringert, um eine schadlose Vergrößerung des durch den Fluidraum gebildeten Teilvolumens zu ermöglichen, wenn die Harnstofflösung im Fluidraum gefriert.

Die Fig. 5 zeigt von einem Ausführungsbeispiel den Anschlussteil 92 mit der zur Pumpe 1 führenden Eingangsleitung 3 und der Ausgangsleitung 23 für die dosierte Abgabe der Harnstofflösung. An der Ausgangsleitung 23 sind ein Temperatursensor 93 und ein Drucksensor 94 angeschlossen. An der elektrischen Steckverbindung 95 der Sensoren 93, 94 sind in Fig. 2 bis 4 jeweils Steckerkappen 96 eingezeichnet, während in Fig. 5 lediglich am Drucksensor 94 eine Steckerkappe 96 dargestellt ist. Beide Sensoren 93, 94 sind als Einschraubsensoren mittels Einschraubgewinden 97 bzw. 98 in den Anschlussteil 92 eingeschraubt. Dabei erstreckt sich der Messfühler 99 des Temperatursensors 93 in die Ausgangsleitung 23. Seitens des Drucksensors 94 ist ein Druck übertragendes Element, beispielsweise in Form einer Membran 88, in Fluidverbindung mit der Ausgangsleitung 23.

Jedem Sensor 93 und 94 ist als Gefrierschutz ein nachgiebiges Bauelement zugeordnet, das am Fluidbereich des jeweiligen Sensors 93, 94 ein nachgiebiges Wandteil bildet. Beim Temperatursensor 93 ist hierfür an dem dem Messfühler 99 gegenüberliegenden Teil der Ausgangsleitung 23 ein nachgiebiges Polster 100 vorgesehen, das beim vorliegenden Beispiel aus einem Würfel aus Moosgummi gebildet ist. Seitens des Drucksensors 94 ist ein an entsprechender Stelle der Ausgangsleitung 23 angeordnetes Polster 101 in Form einer Platte angeordnet, die ebenfalls aus Moosgummi gebildet ist und ebenfalls ein nachgiebiges Wandteil der Ausgangsleitung 23 am Eingangsbereich des Sensors 94 bildet. Durch diese Nachgiebigkeit ist die Volumenvergrößerung jeweils kompensierbar, die sich bei einem Gefrieren der wässrigen Harnstofflösung in der Ausgangsleitung 23 ergibt, so dass eine Beschädigung der Anschlussbereiche der Sensoren 93, 94, wie Messfühler 99 und Einschraubgewinde 97, 98 vermieden ist.

Es versteht sich, dass anstelle eines kompressiblen Körpers, wie dem Moosgummipolster, ein nachgiebiges Wandungsteil an der Ausgangsleitung 23 oder am Sensor 93, 94 vorgesehen sein könnte, etwa ein Bauelement, das, wie es in Fig. 2 und 3 gezeigt ist, durch ein Federelement abgestützt ist.

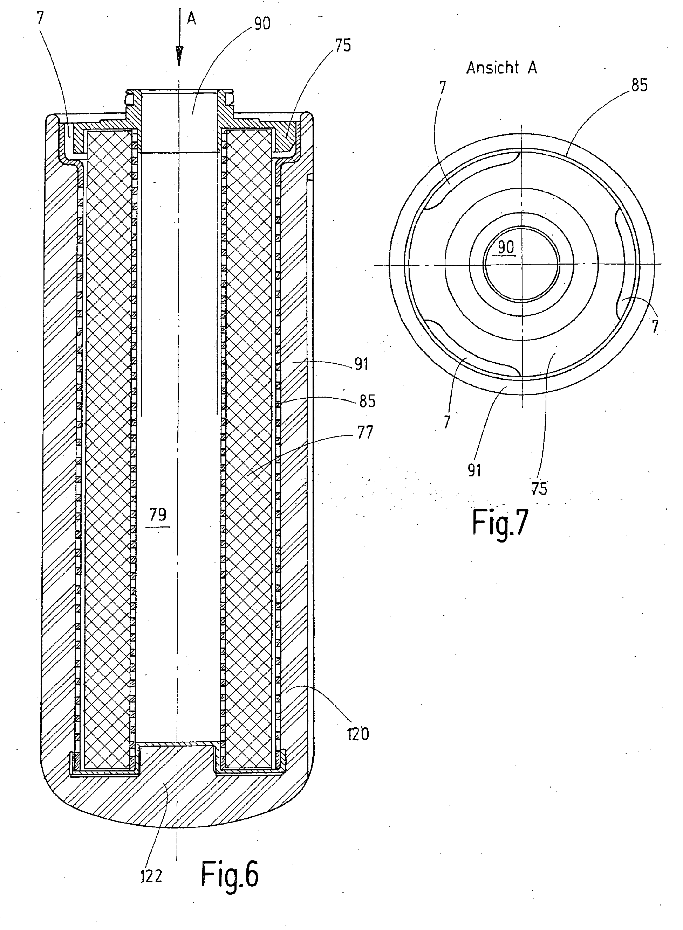

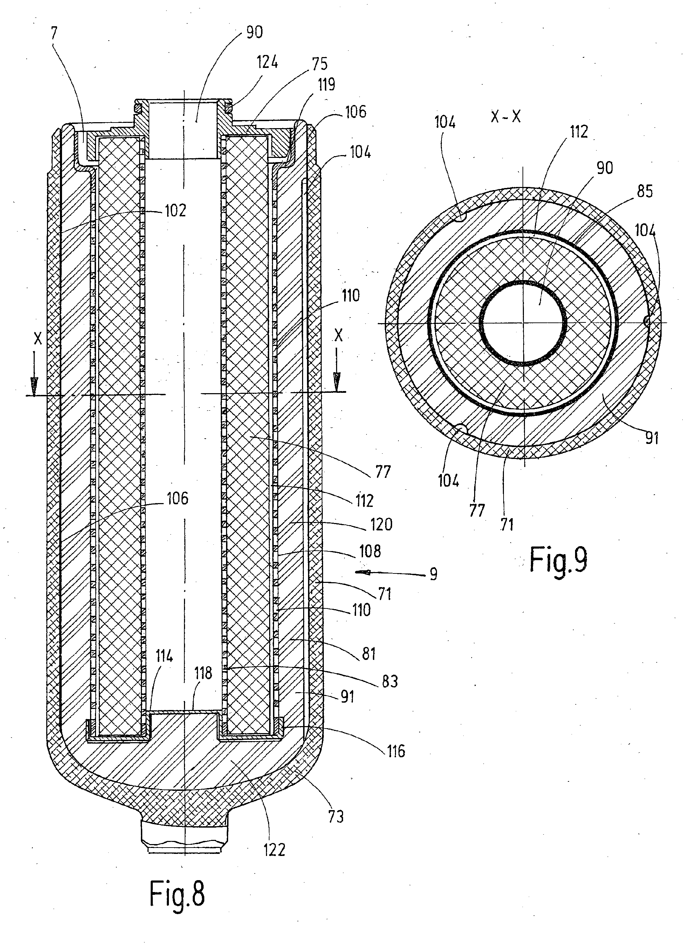

Das nachfolgende Ausführungsbeispiel einer erfindungsgemäßen Filtervorrichtung wird nur noch insofern erläutert, als es sich wesentlich von der vorangegangenen Ausführungsform nach der Fig. 4 unterscheidet. Dabei werden dieselben Bauteile mit denselben Bezugszeichen gekennzeichnet und die insoweit zu Fig. 4 getroffenen Ausführungen gelten dann auch für die Ausgestaltungen nach den Figuren 6 bis 9. Wie insbesondere die Fig. 8 zeigt, ist die mantelartige Ausgleichseinrichtung 91 neben dem Filtergehäuse 71 ein eigenständiges Bauteil, wobei die Ausgleichseinrichtung 91 in jedem Betriebszustand des Systems außenumfangsseitig und im Wesentlichen in abstandsfreier Weise von dem Filtergehäuse 71 auf dessen Innenumfangsseite 102 umfasst ist. Einzig entlang von Stellen kanalartiger Vertiefungen 104 ist die dahingehende Anlage unterbrochen. Die dahingehenden kanalartigen Vertiefungen 104 (gemäß der Darstellung nach der Fig. 9 insgesamt drei Stück) dienen dem verbesserten Einbau der Ummantelung 91 in das Innere des topfartigen Filtergehäuses 71, in dem Material der Ummantelung 91 geringfügig sich in Richtung der Vertiefungen 104 beim Einbau verdrängen kann, wobei ansonsten passgenau der Außenumfang 106 der zylindrischen Ummantelung 91 in die zugewandte zylindrische Innenumfangswand 102 des Filtergehäuses 71 passt. Insoweit ist also die Ausgleichseinrichtung 91 in unverformtem Zustand in vollflächiger Anlage mit dem Filtergehäuse 71.

Zum Inneren in Richtung des Filterelementes 77 hin ist die Ausgleichseinrichtung 91 in stützender Anlage mit dem Stützkörper 85, der gegenüber der Ausführungsform nach der Fig. 4 hier einen Abstandhalter ausbildet, der das Filterelement 77 außenumfangsseitig mit einem vorgebbaren Abstand umfasst; ansonsten aber wiederum in Anlage ist mit der Innenseite 108 der Ummantelung 91. Auch ist für einen verbesserten Fluiddurchtritt der Abstandhalter 85 mit Durchlässen 110 versehen. Gemäß der Schnittdarstellung nach der Fig. 8 erlaubt also die im Filtergehäuse 71 angeordnete verformbare Ausgleichseinrichtung 91 eine druckabhängige Vergrößerung des den Fluidraum 79 als Ganzes jeweils bildenden Teilvolumens relativ zum übrigen Restvolumen des Filtergehäuses 71. Das mittels des Abstandhalters 85 gebildete Teilvolumen 112 erlaubt jedenfalls eine Vergleichmäßigung des über den Filtereinlass 7 einströmenden Unfiltratstromes, der im normalen Filtrationsbetrieb das bevorzugt plissiert ausgebildete Filtermedium 81 (Fig. 9) zwischen den Filterfalten (nicht dargestellt) nach innen hin durchströmt, wobei nach Durchströmen der Filterfalten sowie des zuinnerst angeordneten Stützrohres 83 der derart abgereinigte Fluidstrom über den Filterausgang 90 das Filterelement in gereinigter Weise für die sich anschlie-βende Weiterverwendung verlässt. Der einfacheren Darstellung wegen wurde in der Fig. 8 die Heizeinrichtung 87 nach der Fig. 4 ebenso weggelassen wie das Abschlussstück 89.

In Blickrichtung auf die Fig. 8 gesehen, befindet sich am unteren Ende der Filtervorrichtung für das Filterelement 77 eine der Endkappe 75 gegenüberliegende weitere Endkappe 114, die mit einem wannenförmigen Umfassungsrand 116 sowohl das Filterelement 77 als auch das Stützrohr 83 sowie den Abstandhalter 85 mit aufnimmt. Für eine Erhöhung der Stabilität zum inneren Filterraum 79 hin ist die dahingehende Endkappe 114 auf ihrer mittleren Einfassungsseite mit einem hochgezogenen Bodenteil 118 versehen. Am anderen, gegenüberliegenden Ende im Bereich der oberen Endkappe 75 erweitert sich der Stützkörper oder Abstandhalter 85 radial nach außen hin und stützt sich insoweit an einer radial erweiterten Schulter 119 der Ummantelung 91 ab. Insoweit ist das obere Ende des Abstandhalters 85 zwischen der Außenumfangsseite der Endkappe 75 sowie der zugeordneten Innenumfangsseite 108 der Ummantelung 91 festgelegt und bildet insoweit auch die bogenförmigen Segmentausnehmungen in der oberen Endkappe 75 als Filtereinlass 7 aus.

Wie insbesondere die Fig. 8 weiter zeigt, ist der zylindrische Mantelteil 120 der Ummantelung 91 im Bereich der unteren Endkappe 114 einstückig in ein Kappenteil 112 übergeführt, das insoweit gleichfalls verformbar die Abstützung des Elementaufbaus zu dem geschlossenen Boden 73 des Filtergehäuses 71 vornimmt. Obwohl das Endkappenteil 122 von der Einsatzdicke her größer gewählt ist als die freie Wandquerschnittsdicke der Ummantelung 91, beispielsweise im Bereich der Schnittlinie X-X, ist doch der Mantelquerschnitt im Wesentlichen gleich und homogen über die gesamte Längsausrichtung der Filtereinrichtung gebildet. Kommt es zu einem Gefrieren des zu filtrierenden Mediums, kann die Volumenkompensation über die Durchlässe 110 des Abstandhalters 85 direkt auf die Innenumfangsseite 108 der verformbaren Ummantelung 91 in diesem Bereich erfolgen, und die Au-βenumfangsseite des Filterelementes 77 insbesondere gebildet durch die außen liegenden Falten des plissierten Filtermediums 81, ist entsprechend geschützt. Die aufgezeigten Filteranlässe 7 müssen dann entgegen der Darstellung nach der Fig. 8 direkt mit den Abständen zwischen den Filterfalten des plissierten Filtermediums 81 medienführend verbunden sein. Der einfacheren Darstellung wegen wurde in der Fig. 9 das Filtermedium 81 als hohlzylindrisches Filterelement 77 eingezeichnet. Unterstellt, der Abstandhalter 85 generiert das aufgezeigte Teilvolumen 102, ist insoweit auch der Einsatz von zylindrischen Filterelementen 77 gemäß der Darstellung nach der Fig. 9 möglich.

Die Ausgestaltung nach der Fig. 6 zeigt die Filtervorrichtung gemäß der Darstellung nach der Fig. 8, jedoch ohne das die Filtervorrichtung nach au-βen hin abschließende Filtergehäuse 71.

Anstelle eines Moosgummi-Materials für die Ummantelung 91 kann auch ein übliches Kautschuk-Material, beispielsweise EPDM eingesetzt werden. Das letztgenannte Material ist auch geeignet zur Ausbildung des Dichtringes 124, der außenumfangsseitig nach oben hin die Endkappe 75 radial abschließt, sobald das Filterelement in dem Gesamtsystem (vgl. Fig. 4) aufgenommen ist.

Die Endkappe 75 des Filterelements 77 ist bevorzugt aus einem Kunststoffvollmaterial gebildet oder aus einem sonstigen Material, das bevorzugt nicht wärmeleitend oder nur geringfügig wärmeleitend ist. Dergestalt lassen sich Kältebrücken zwischen den Gehäuse-Metallteilen der Filtervorrichtung und dem Innenvolumen des Filterelements nebst der Filterelementaufnahme erreichen. Auch dies stellt eine wirksame Maßnahme dar, nach Möglichkeit das Einfrieren einer gefrierbaren Substanz auf der Filterelementseite vermeiden zu helfen. Da die topfartige Ausgleichseinrichtung 91 vollumfänglich das Filterelement 77 umschließt, ist bei einem Wechsel des Filterelements 77 gegen ein Neuelement dieses zusammen mit der jeweiligen Restmenge an zu filtrierendem Fluid aus dem Gehäuse herausnehmbar, ohne dass, wie sonst üblich, das Filterelement zur Umgebung hin leerläuft, was zu Umweltproblemen führt. Mithin ist mit der erfindungsgemäßen Ausgleichseinrichtung ein sauberer Elementwechsel gewährleistet.

## Patentansprüche

1. System zur Abgasnachbehandlung bei einem Verbrennungsmotor und/oder zur Pulsationsdämpfung und/oder Volumenstromglättung von Fluiden, wie Hydrauliköl, aufweisend zumindest eine Filtervorrichtung (9) mit einem in einem Filtergehäuse (71) aufgenommenen Filterelement (77) zur Filtration einer gefrierbaren Substanz, insbesondere in Form einer wässrigen Harnstofflösung, die in den Abgasstrom des Verbrennungsmotors zuführbar ist, wobei Teile der Filtervorrichtung (9) mit mindestens einem Fluidraum (79) für die zumindest zeitweise Aufnahme der gefrierbaren Substanz innerhalb des Filtergehäuses (71) zusammenwirken, wobei als Schutz gegen eine Schädigung des Systems durch Volumenausdehnung bei Gefrieren der Substanz eine verformbare Ausgleichseinrichtung (91) vorhanden ist, die innerhalb des Filtergehäuses (71) angeordnet ist, wobei die Ausgleichseinrichtung (91) neben dem Filtergehäuse (71) ein eigenständiges Bauteil ist, und wobei die Ausgleichseinrichtung (91) in jedem Betriebszustand außenumfangsseitig und im Wesentlichen in abstandsfreier Weise von dem Filtergehäuse (71) umfasst ist, **dadurch gekennzeichnet, dass** die Ausgleichseinrichtung (91) im unverformten Zustand zumindest teilweise in unmittelbarer Anlage mit Teilen eines Abstandhalters (85) ist, der das Filterelement (77) zumindest teilweise umfasst, und dass der Abstandhalter (85) aus einem mit Fluiddurchlässen (110) versehenen Abstandsrohr gebildet ist, der mit einem vorgebbaren Abstand das Filtermaterial des Filterelementes (77) umfasst.

2. System nach Anspruch 1, **dadurch gekennzeichnet, dass** die verformbare Ausgleichseinrichtung (91) eine mit einer Zunahme des Fluiddruckes, insbesondere bei Gefrieren einhergehende Volumenausdehnung der Substanz innerhalb des zuordenbaren Fluidraumes (79) kompensiert.

3. System nach Anspruch 1 oder 2, **dadurch gekennzeichnet, dass** die im Filtergehäuse (71) angeordnete verformbare Ausgleichseinrichtung (91) eine druckabhängige Vergrößerung des den Fluidraum (79) als Ganzes jeweils bildenden Teilvolumens relativ zum übrigen Restvolumen des Filtergehäuses (71) ermöglicht.

4. System nach einem der vorstehenden Ansprüche, **dadurch gekennzeichnet, dass** die Verformbarkeit der Ausgleichseinrichtung (91) elastischer Natur mit vorgebbarer Kompressibilität ist und dass die Ausgleichseinrichtung (91) mindestens einen vorzugsweise zylindrischen Mantelteil (120) aufweist, der sich in Längsrichtung des Filtergehäuses (71) erstreckt.

5. System nach Anspruch 4, **dadurch gekennzeichnet, dass** der Mantelteil (120) in Richtung des zumindest teilweise geschlossen ausgeführten Endes (73) des Filtergehäuses (71) in ein Kappenteil (122) übergeht, das das Filterelement (77) gegenüber dem Filtergehäuse (71) an seinem einen freien Ende abstützt.

6. System nach Anspruch 5, **dadurch gekennzeichnet, dass** das Kappenteil (122) einstückiger Bestandteil des Mantelteils (120) ist.

7. System nach einem der Ansprüche 4 bis 6, **dadurch gekennzeichnet, dass** der Mantelteil (120) und/oder das Kappenteil (122) aus einem porösen, vorzugsweise aus einem geschlossene Poren aufweisenden Material gebildet ist bzw. sind, vorzugsweise jeweils aus Moosgummi bestehen.

8. System nach einem der vorstehenden Ansprüche, **dadurch gekennzeichnet, dass** das Filterelement (77) aus einem zylindrischen oder plissierten Filtermaterial (81) besteht, das sich zwischen zwei Endkappen (75, 114) des Elementes (77) erstreckt.

9. System nach einem der vorstehenden Ansprüche, **dadurch gekennzeichnet, dass** die bevorzugt topfförmig ausgebildete Ausgleichseinrichtung (91) außenumfangsseitig mit mindestens einer Längsnut (104) versehen ist, um den abstandsfreien Einbau in das Filtergehäuse (71) zu erleichtern.

10. System nach einem der vorstehenden Ansprüche, **dadurch gekennzeichnet, dass** die Filtervorrichtung einen sich durch die eine Endkappe (75) in den inneren Filterhohlraum (79) erstreckenden, elektrischen Heizstab (87) aufweist.

11. System nach einem der vorstehenden Ansprüche, **dadurch gekennzeichnet, dass** für eine dosierte Zufuhr der gefrierbaren Substanz zumindest eine Pumpe (1) vorgesehen ist, dass Teile der Pumpe (1) mit mindestens einem Fluidraum (27) für die zumindest zeitweise Aufnahme der gefrierbaren Substanz zusammenwirken und dass die Ausgleichseinrichtung (25) auf den Fluidraum (27) derart einwirkt, dass eine mit einer Zunahme des Fluiddruckes bei Gefrieren der Substanz einhergehende Volumenvergrößerung kompensiert ist.

12. System nach einem der vorstehenden Ansprüche, **dadurch gekennzeichnet, dass** zumindest eine Sensoranordnung mit Sensoren (93, 94) vorgesehen ist, die Zustandsgrößen der gefrierbaren Substanz, wie Druck und Temperatur, erkennen und mit mindestens einem Fluidraum (23) für die zumindest zeitweise Aufnahme der Substanz zusammenwirken, und dass die Ausgleichseinrichtung auf den Fluidraum (23) derart einwirkt, dass eine mit der Zunahme des Fluiddrucks einhergehende Volumenausdehnung der Substanz innerhalb des Fluidraums (23) kompensiert ist.

## Claims

1. A system for exhaust gas post-treatment in an internal combustion engine and/or for pulsation damping and/or volume flow smoothing of fluids, such as hydraulic oil, having at least one filter device (9) with a filter element (77) accommodated in a filter housing (71) for filtering a freezable substance, in particular in the form of an aqueous urea solution which can be introduced into the exhaust flow of the internal combustion engine, wherein parts of the filter device (9) interact with at least one fluid chamber (79) for the at least temporary accommodation of the freezable substance inside the filter housing (71), wherein a deformable compensating device (91) is present as protection against damage to the system caused by volume expansion upon freezing of the substance, which compensating device (91) is arranged inside the filter housing (71), wherein the compensation device (91) is a separate component in addition to the filter housing (71), and wherein the compensating device (91) is enclosed by the filter housing (71) at its outer periphery and substantially without spacing in every operating state, **characterised in that,** in deformed state, the compensation device (91) rests, at least partially, directly against parts of a spacer (85) which at least partially encloses the filter element (77), and that the spacer (85) is formed from a spacer tube provided with fluid passages (110), which tube encloses the filter material of the filter element (77) at a predeterminable distance.

2. The system according to claim 1, **characterised in that** the deformable compensation device (91) compensates a volume dilatation of the substance inside the fluid chamber (79) to be assigned, which dilatation accompanies an increase in fluid pressure, in particular during freezing.

3. The system according to claim 1 or 2, **characterised in that** the deformable compensation device (91) arranged in the filter housing (71) makes possible a pressure-dependent enlargement of the partial volume forming the fluid chamber (79) as a whole, relative to the remaining residual volume of the filter housing (71).

4. The system according to one of the preceding claims, **characterised in that** the deformability of the compensation device (91) is of an elastic nature, with a predeterminable compressibility, and that the compensation device (91) has at least one preferably cylindrical casing part (120) which extends in longitudinal direction of the filter housing (71).

5. The system according to claim 4, **characterised in that** the casing part (120) crosses over into a cap part (122) in direction of the end (73), designed at least partially closed, of the filter housing (71), which cap part (122) supports the filter element (77) vis-à-vis the filter housing (71) at its one free end.

6. The system according to claim 5, **characterised in that** the cap part (122) is a monobloc component of the casing part (120).

7. The system according to one of claims 4 to 6, **characterised in that** the casing part (120) and/or the cap part (122) is/are formed from a porous material, preferably one having closed pores, preferably each consisting of expanded rubber.

8. The system according to one of the preceding claims, **characterised in that** the filter element (77) consists of a cylindrical or pleated filter material (81) which extends between two end caps (75, 114) of the element (77).

9. The system according to one of the preceding claims, **characterised in that** the compensation device (91), preferably designed cup-shaped, is provided on its outer periphery with at least one longitudinal groove (104) in order to simplify spacing-free mounting in the filter housing (71).

10. The system according to one of the preceding claims, **characterised in that** the filter device has an electrical heating rod (87) extending through the one end cap (75) into the inner filter cavity (79).

11. The system according to one of the preceding claims, **characterised in that** at least one pump (1) is provided for a metered supply of the freezable substance, that parts of the pump (1) interact with at least one fluid chamber (27) for the at least temporary accommodation of the freezable substance and that the compensation device (25) acts on the fluid chamber (27) such that a volume expansion which accompanies an increase in fluid pressure during freezing of the substance, is compensated.

12. The system according to one of the preceding claims, **characterised in that** at least one sensor arrangement with sensors (93, 94) is provided, which sensors recognise the state variables of the freezable substance, such as pressure and temperature, and interact with at least one fluid chamber (23) for the at least temporary accommodation of the substance, and that the compensation device acts on the fluid chamber (23) such that a volume dilatation of the substance, which dilatation accompanies an increase in fluid pressure, inside the fluid chamber (23), is compensated.

## Revendications

1. Système de retraitement des gaz d'échappement dans un moteur à combustion interne et/ou d'amortissement des pulsations et/ou de lissage du courant en volume de fluides, comme de l'huile hydraulique, comportant au moins un système (9) de filtration, ayant un élément (77) de filtre reçu dans un corps (71) de filtre pour la filtration d'une substance congelable, notamment sous la forme d'une solution aqueuse d'urée, qui peut être envoyée dans le courant de gaz d'échappement du moteur à combustion interne, des parties du système (1) de filtration coopérant avec au moins un espace (79) pour du fluide de réception, au moins de temps en temps, de la substance congelable à l'intérieur du corps (71) de filtre, dans lequel il y a, comme protection vis-à-vis d'un endommagement du système par dilatation en volume à la congélation de la substance, un dispositif (91) déformable de compensation, qui est disposé à l'intérieur du corps (71) du filtre, le dispositif (91) de compensation étant à côté du corps (71) du filtre une pièce autonome, et dans lequel le dispositif (91) de compensation est, dans chaque état de fonctionnement, entouré, du côté du pourtour extérieur et sensiblement sans distance, du corps (71) du filtre, **caractérisé en ce que** le dispositif (91) de compensation est, à l'état non-déformé, au moins en partie, directement en contact avec des parties d'une entretoise (85), qui entoure, au moins en partie, l'élément (77) de filtre, et **en ce que** l'entretoise (85) est formée d'un tube de mise à distance, qui est pourvu de traversées (110) pour du fluide et qui entoure, à une distance pouvant être donnée à l'avance, le matériau filtrant de l'élément (77) de filtre.

2. Système suivant la revendication 1, **caractérisé en ce que** le dispositif (91) déformable de compensation compense, à l'intérieur de l'espace (79) pour du fluide pouvant être associé, une dilatation en volume de la substance inhérente à une augmentation de la pression du fluide, notamment à la congélation.

3. Système suivant la revendication 1 ou 2, **caractérisé en ce que** le dispositif (91) déformable de compensation disposé dans le corps (71) du filtre rend possible une augmentation, en fonction de la pression, du sous-volume formant respectivement l'espace (79) pour du fluide dans son entier par rapport au volume restant du corps (71) du filtre.

4. Système suivant l'une des revendications précédentes, **caractérisé en ce que** la déformabilité du dispositif (91) de compensation est de nature élastique à compressibilité pouvant être donnée à l'avance et **en ce que** le dispositif (91) de compensation a au moins une partie (120) d'enveloppe, de préférence cylindrique, qui s'étend dans la direction longitudinale du corps (71) du filtre.

5. Système suivant la revendication 4, **caractérisé en ce que** la partie (120) d'enveloppe se transforme dans la direction de l'extrémité (73), réalisée, au moins en partie, fermée, du corps (71) du filtre en une partie (122) de coiffe, qui soutient, à l'une de ses extrémités libres, l'élément (77) de filtre par rapport au corps (71) de filtre.

6. Système suivant la revendication 5, **caractérisé en ce que** la partie (122) de coiffe fait partie d'une seule pièce de la partie (120) d'enveloppe.

7. Système suivant l'une des revendications 4 à 6, **caractérisé en ce que** la partie (120) d'enveloppe et/ou la partie (122) de coiffe est/sont en un matériau poreux, de préférence à pores fermés, de préférence respectivement en caoutchouc mousse.

8. Système suivant l'une des revendications précédentes, **caractérisé en ce que** l'élément (77) de filtre est en un matériau (81) filtrant cylindrique ou plissé, qui s'étend entre deux coiffes (75, 114) d'extrémité de l'élément (77).

9. Système suivant l'une des revendications précédentes, **caractérisé en ce que** le dispositif (91) de compensation, constitué de préférence sous la forme d'un godet, est pourvu, du côté du pourtour extérieur, d'au moins une rainure (104) longitudinale pour faciliter le montage sans distance dans le corps (71) du filtre.

10. Système suivant l'une des revendications précédentes, **caractérisé en ce que** le dispositif de filtration a une barre (87) de chauffage électrique s'étendant dans la cavité (79) du filtre en traversant la une coiffe (75) d'extrémité.

11. Système suivant l'une des revendications précédentes, **caractérisé en ce qu'**il est prévu au moins une pompe (1) pour l'apport dosé de la substance congelable, **en ce que** des parties de la pompe (1) coopèrent avec au moins un espace (27) pour du fluide pour recevoir, au moins de temps en temps, la substance congelable et **en ce que** le dispositif (25) de compensation agit sur l'espace (27) pour du fluide de manière à compenser une augmentation de volume inhérente à une augmentation de la pression du fluide à la congélation de la substance.

12. Système suivant l'une des revendications précédentes, **caractérisé en ce qu'**il est prévu au moins un dispositif de capteur ayant des capteurs (93, 94), qui détectent des grandeurs d'état de la substance congelable, comme la pression et la température, et qui coopèrent avec au moins un espace (23) pour du fluide de réception, au moins de temps en temps, de la substance et **en ce que** le dispositif de compensation agit sur l'espace (23) pour du fluide de manière à compenser une dilatation en volume de la substance dans l'espace (23) pour du fluide inhérente à l'augmentation de la pression du fluide.
